# EUROPEAN PATENT APPLICATION

(11) **EP 3 604 011 A1**
(43) Date of publication of application: **05.02.2020**
(21) Application number: 18776528.4
(22) Date of filing: 29.03.2018
(51) Int. Cl.: B60K 6/28, B60K 6/40

(54) **HYBRID ELECTRIC VEHICLE, POWER SYSTEM THEREOF, AND POWER GENERATION CONTROL METHOD THEREFOR**

(30) Priority: 31.03.2017 CN 201710211012
(71) Applicant: BYD Company Limited, Shenzhen, Guangdong 518118 (CN)
(72) Inventor: CHEN, Xinli, Shenzhen Guangdong 518118 (CN); MU, Jinhui, Shenzhen Guangdong 518118 (CN); XU, Boliang, Shenzhen Guangdong 518118 (CN); YU, Junxin, Shenzhen Guangdong 518118 (CN)
(74) Representative: Haseltine Lake Kempner LLP
(86) International application number: PCT/CN2018/081044
(87) International publication number: WO 2018/177358

(57) **Abstract**

This application discloses a hybrid electric vehicle, and a power system and a power generation control method thereof. The power system includes: an engine, configured to output power to a wheel of the hybrid electric vehicle through a clutch; a power motor, configured to output driving power to a wheel of the hybrid electric vehicle; a power battery, configured to supply power to the power motor; a DC-DC converter;a low-voltage storage battery, connected to the low-voltage storage battery and the DC-DC converter; a secondary motor, connected to the engine, where the secondary motor is connected to the power motor, the DC-DC converter, and the power battery separately, and the secondary motor is driven by the engine to generate power; a control module, configured to obtain an SOC value of the power battery, an SOC value of the low-voltage storage battery, and a maximum allowable generating power of the secondary motor, and determine, according to the SOC value of the power battery, the SOC value of the low-voltage storage battery, and the maximum allowable generating power of the secondary motor, whether the secondary motor charges the power battery and/or the low-voltage storage battery, so that low-speed electric balance and low-speed smoothness of the whole vehicle can be maintained.

## Description

### CROSS-REFERENCE TO RELATED APPLICATIONS

This application claims priority to and benefits of Chinese Patent Application Serial No. 201710211012.2, entitled "HYBRID ELECTRIC VEHICLE, AND POWER SYSTEM AND POWER GENERATION CONTROL METHOD THEREOF", filed with the National Intellectual Property Administration, P. R. China on March 31, 2017. The entire content of the above-referenced application is incorporated herein by reference.

### FIELD

The present invention relates to the field of vehicle technologies, and in particular, to a power system of a hybrid electric vehicle, a hybrid electric vehicle including the system, a power generation control method of a hybrid electric vehicle, and a computer-readable storage medium.

### BACKGROUND

To reduce energy consumption, development and utilization of energy-efficient vehicles have become a trend. As an energy-efficient vehicle, a hybrid vehicle is driven by an engine and/or a motor.

However, in the related art, a motor-generator of a hybrid electric vehicle also serves as a generator while serving as a driving motor. Consequently, a revolution speed of the motor-generator is relatively low during low-speed traveling, and a generating power and generating efficiency of the motor-generator are also very low, and therefore, cannot satisfy a power demand of low-speed traveling. Consequently, it is relatively difficult for a whole vehicle to maintain electric balance at a low speed.

### SUMMARY

An objective of the present invention is to at least resolve one of the technical problems in the related art to some extent. Therefore, a first objective of the present invention is to provide a power system of a hybrid electric vehicle, to implement low-speed electric balance of a whole vehicle.

A second objective of the present invention is to provide a hybrid electric vehicle. A second objective of the present invention is to provide a power generation control method of a hybrid electric vehicle. A fifth objective of the present invention is to provide a computer-readable storage medium.

To achieve the foregoing objectives, an embodiment of a first aspect of the present invention provides a power system of a hybrid electric vehicle, including: an engine, configured to output power to a wheel of the hybrid electric vehicle through a clutch; a power motor, configured to output driving power to a wheel of the hybrid electric vehicle; a power battery, configured to supply power to the power motor; a DC-DC converter; a low-voltage storage battery, connected to the low-voltage storage battery and the DC-DC converter; a secondary motor, connected to the engine, where the secondary motor is connected to the power motor, the DC-DC converter, and the power battery separately, and the secondary motor is driven by the engine to generate power; a control module, configured to obtain an SOC value of the power battery, an SOC value of the low-voltage storage battery, and a maximum allowable generating power of the secondary motor, and determine, according to the SOC value of the power battery, the SOC value of the low-voltage storage battery, and the maximum allowable generating power of the secondary motor, whether the secondary motor charges the power battery and/or the low-voltage storage battery.

According to the power system of a hybrid electric vehicle provided in this embodiment of the present invention, the engine outputs power to a wheel of the hybrid electric vehicle through the clutch, the power motor outputs driving power to a wheel of the hybrid electric vehicle, and the power battery supplies power to the power motor. When being actuated by the engine to generate power, the secondary motor implements at least one of charging the power battery, supplying power to the power motor, and supplying power to the DC-DC converter. The control module determines whether the secondary motor charges the power battery and/or the low-voltage storage battery according to an SOC value of the power battery, an SOC value of the low-voltage storage battery, and a maximum allowable generating power of the motor. Therefore, low-speed electric balance and low-speed smoothness of the whole vehicle can be maintained, and performance of the whole vehicle can be improved. In addition, the system not only can charge the power battery, but also can charge the low-voltage storage battery.

To achieve the foregoing objectives, an embodiment of a second aspect of the present invention provides a hybrid electric vehicle, including the power system of a hybrid electric vehicle.

According to the hybrid electric vehicle provided in this embodiment of the present invention, various driving modes can be implemented, low-speed electric balance and low-speed smoothness of the whole vehicle can be maintained, and performance of the whole vehicle can be improved. In addition, the vehicle not only can charge the power battery, but also can charge the low-voltage storage battery.

To achieve the foregoing objectives, an embodiment of a third aspect of the present invention provides a power generation control method of a hybrid electric vehicle, including the following steps: obtaining an SOC value of a power battery and an SOC value of a low-voltage storage battery of the hybrid electric vehicle; obtaining a maximum allowable generating power of a secondary motor of the hybrid electric vehicle; and determining, according to the SOC value of the power battery, the SOC value of the low-voltage storage battery, and the maximum allowable generating power of the secondary motor, whether the secondary motor charges the power battery and/or the low-voltage storage battery.

According to the power generation control method of a hybrid electric vehicle provided in this embodiment of the present invention, whether the secondary motor charges the power battery and/or the low-voltage storage battery is determined according to an SOC value of the power battery, an SOC value of the low-voltage storage battery, and a maximum allowable generating power of the motor, so that in the method, not only the power battery can be charged, but also the low-voltage storage battery can be charged.

To achieve the foregoing objectives, an embodiment of a fourth aspect of the present invention provides a computer-readable storage medium, including an instruction stored therein, where when the instruction is executed, the hybrid electric vehicle performs power generation control method according to any one of the foregoing.

### BRIEF DESCRIPTION OF THE DRAWINGS

Fig. 1 is a schematic block diagram of a power system of a hybrid power vehicle according to an embodiment of the present invention;
Fig. 2a is a schematic structural diagram of a power system of a hybrid power vehicle according to an embodiment of the present invention;
Fig. 2b is a schematic structural diagram of a power system of a hybrid power vehicle according to another embodiment of the present invention;
Fig. 3 is a schematic block diagram of a power system of a hybrid power vehicle according to an embodiment of the present invention;
Fig. 4 is a schematic diagram of a transmission structure between an engine and a corresponding wheel according to an embodiment of the present invention;
Fig. 5 is a schematic diagram of a transmission structure between an engine and a corresponding wheel according to another embodiment of the present invention;
Fig. 6 is a schematic block diagram of a power system of a hybrid power vehicle according to another embodiment of the present invention;
Fig. 7 is a schematic block diagram of a hybrid power vehicle according to an embodiment of the present invention;
Fig. 8 is a flowchart of a power generation control method of a hybrid power vehicle according to an embodiment of the present invention; and
Fig. 9 is a flowchart of a power generation control method of a hybrid power vehicle according to an embodiment of the present invention.

### DETAILED DESCRIPTION

The following describes in detail embodiments of the present invention. Examples of the embodiments are shown in the accompanying drawings, where reference signs that are the same or similar from beginning to end represent same or similar components or components that have same or similar functions. The following embodiments described with reference to the accompanying drawings are exemplary, and are intended to describe the present invention and cannot be construed as a limitation to the present invention.

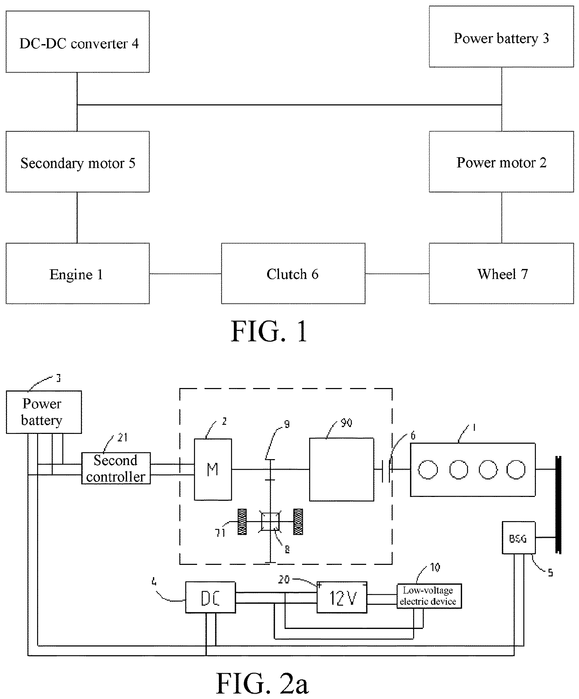

A power system of a hybrid electric vehicle provided in an embodiment of an aspect of the present invention is described below with reference to Figs. 1 to 5. The power system provides sufficient power and electric energy for normal running of the hybrid electric vehicle.

FIG. 1 is a schematic block diagram of a power system of a hybrid power vehicle according to an embodiment of the present invention. As shown in FIG. 1, the power system of the hybrid electric vehicle includes: an engine 1, a power motor 2, a power battery 3, a DC-DC converter 4, and a secondary motor 5.

As shown in Fig. 1 to Fig. 3, the engine 1 is configured to output power to a wheel 7 of the hybrid electric vehicle through a clutch 6; and the power motor 2 is configured to output driving power to a wheel 7 of the hybrid electric vehicle. That is, the power system in this embodiment of the present invention can provide power for normally running of the hybrid electric vehicle through the engine 1 and/or the power motor 2. In some embodiments of the present invention, a power source of the power system may be the engine 1 and the power motor 2. That is, either of the engine 1 and power motor 2 can individually output power to the wheel 7, or the engine 1 and the power motor 2 can output power to the wheel 7 together.

The power battery 3 is configured to supply power to the power motor 2. The secondary motor 5 is connected to the engine 1. For example, the secondary motor 5 may be connected to the engine 1 through a wheel train end of the engine 1. The secondary motor 5 is connected to the power motor 2, the DC-DC converter 4, and the power battery 3 separately, and when being actuated by the engine 1 to generate power, the secondary motor 5 implements at least one of charging the power battery 3, supplying power to the power motor 2, and supplying power to the DC-DC converter 4. In other words, the engine 1 may actuate the secondary motor 5 to generate power, and electric energy generated by the secondary motor 5 may be provided to at least one of the power battery 3, the power motor 2, and the DC-DC converter 4. It should be understood that the engine 1 may actuate the secondary motor 5 to generate power while outputting power to the wheel 7, or may separately actuate the secondary motor 5 to generate power.

Therefore, the power motor 2 and the secondary motor 5 respectively and correspondingly serve as a driving motor and a generator. Because the secondary motor 5 may also have a relatively high generating power and relatively high generating efficiency at a low speed, a power demand of low-speed traveling can be satisfied, low-speed electric balance and low-speed smoothness of the whole vehicle can be maintained, and performance of the whole vehicle can be improved.

In some embodiments, the secondary motor 5 may be a Belt-driven Starter Generator (BSG) motor. It should be noted that the secondary motor 5 is a high-voltage motor. For example, a generating voltage of the secondary motor 5 is equivalent to a voltage of the power battery 3, so that the electric energy generated by the secondary motor 5 can be directly used to charge the power battery 3 without being subjected to voltage conversion, or may be directly supplied to the power motor 2 and/or the DC-DC converter 4. In addition, the secondary motor 5 is also a high-efficiency generator. For example, when the engine 1 actuates the secondary motor 5 at an idle revolution speed to generate power, 97% or above generating efficiency can be achieved, so that normal generating efficiency is improved.

In addition, in some embodiments of the present invention, the secondary motor 5 may be configured to start the engine 1. That is, the secondary motor 5 may have a function of starting the engine 1. For example, when starting the engine 1, the secondary motor 5 may a crankshaft of the actuate engine 1 to rotate, to enable a piston of the engine 1 to arrive at an ignition position, so as to start the engine 1. Therefore, the secondary motor 5 may implement a function of a starter in the related art.

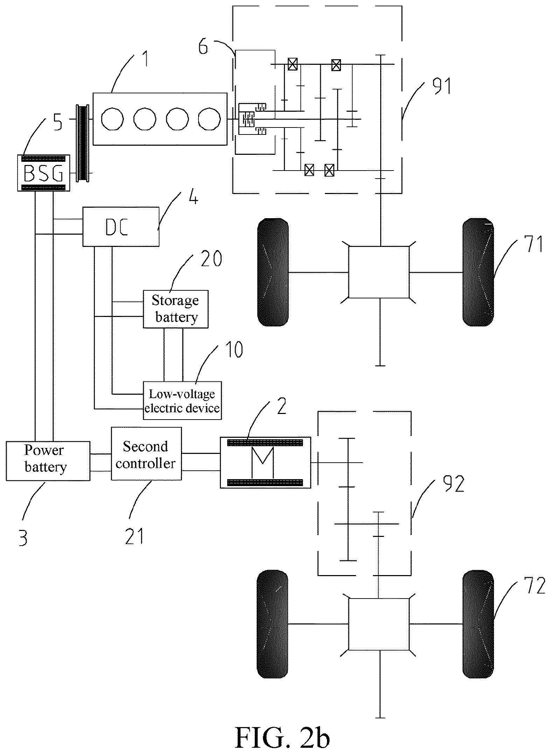

As stated above, the engine 1 and the power motor 2 can both be configured to drive the wheel 7 of the hybrid electric vehicle. For example, as shown in Fig. 2a, the engine 1 and the power motor 2 drive a same wheel, for example, a pair of front wheels 71 (including a left front wheel and a right front wheel), of the hybrid power vehicle together. For another example, as shown in Fig. 2b, the engine 1 may drive a first wheel, for example, the pair of front wheels 71 (including a left front wheel and a right front wheel), of the hybrid power vehicle, and the power motor 2 may output driving power to a second wheel, for example, a pair of rear wheels 72 (including a left rear wheel and a right rear wheel), of the hybrid power vehicle.

In other words, when the engine 1 and the power motor 2 drive the pair of front wheels 71 together, overall driving power of the power system is output to the pair of front wheels 71, and the whole vehicle may use a two wheel drive mode, and when the engine 1 drives the pair of front wheels 71 and the power motor 2 drive the pair of rear wheels 72, driving power of the power system is separately output to the pair of front wheels 71 and the pair of rear wheels 72, and the whole vehicle may use a four wheel drive mode.

Further, when the engine 1 and the power motor 2 drive a same wheel together, with reference to Fig. 2a, the power system of the hybrid electric vehicle further includes a differential 8, a main reducer 9, and a transmission 90. The engine 1 outputs power to the first wheel, for example, the pair of front wheels 71, of the hybrid electric vehicle through the clutch 6, the transmission 90, the main reducer 9, and the differential 8. The power motor 2 outputs driving power to the first wheel, for example, the pair of front wheels 71, of the hybrid electric vehicle through the main reducer 9 and the differential 8. The clutch 6 and the transmission 90 may be integrally disposed.

When the engine 1 drives the first wheel, and the power motor 2 drives the second wheel, with reference to Fig. 2b, the power system of the hybrid electric vehicle further includes a first transmission 91 and a second transmission 92. The engine 1 outputs power to the first wheel, for example, the pair of front wheels 71, of the hybrid electric vehicle through the clutch 6 and the first transmission 91. The power motor 2 outputs driving power to the second wheel, for example, the pair of rear wheels 72, of the hybrid electric vehicle through the second transmission 92. The clutch 6 and the first transmission 91 may be integrally disposed.

Further, in some embodiments of the present invention, as shown in Fig. 1 to Fig. 3, the secondary motor 5 further includes a first controller 51, and the power motor 2 further includes a second controller 21. The secondary motor 5 is connected to the power battery 3 and the DC-DC converter 4 separately through the first controller 51, and is connected to the power motor 2 through the first controller 51 and the second controller 21.

Specifically, the first controller 51 is connected to the second controller 21, the power battery 3, and the DC-DC converter 4 separately. The first controller 51 may include an AC-DC conversion unit. When generating power, the secondary motor 5 may generate an alternating current. The AC-DC conversion unit may convert the alternating current generated by a high-voltage motor 2 during power generation into a high-voltage direct current, for example, a 600 V high-voltage direct current, to perform at least one of charging the power battery 3, supplying power to the power motor 2, and supplying power to the DC-DC converter 4.

Similarly, the second controller 21 may include a DC-AC conversion unit. The first controller 51 may convert an alternating current generated by the secondary motor 5 during power generation into a high-voltage direct current. The DC-AC conversion unit may further convert the high-voltage direct current converted by the first controller 51 to an alternating current, to supply power to the power motor 2.

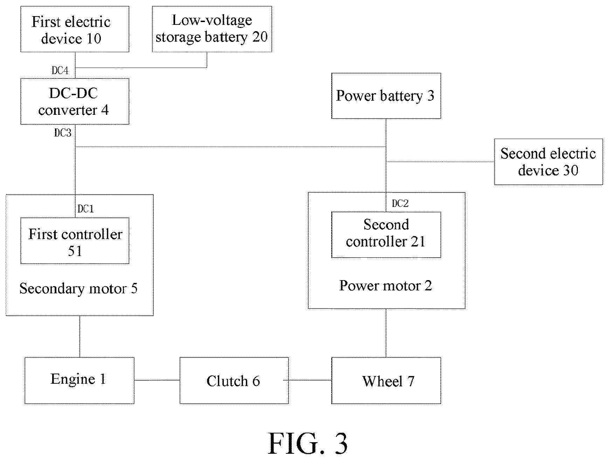

In other words, as shown in Fig. 3, when generating power, the secondary motor 5 may charge the power battery 3 and/or supply power to the DC-DC converter 4 through the first controller 51. That is, secondary motor 5 may implement either or both of charging the power battery 3 and supplying power to the DC-DC converter 4 through the first controller 51. In addition, the secondary motor 5 may further supply power to the power motor 2 through the first controller 51 and the second controller 21.

Further, as shown in Fig. 1 to Fig. 3, the DC-DC converter 4 is further connected to the power battery 3. The DC-DC converter 4 is further connected to the power motor 2 through the second controller 21.

In some embodiments, as shown in Fig. 3, the first controller 51 has a first direct current end DC1, the second controller 21 has a second direct current end DC2, and the DC-DC converter 4 has a third direct current end DC3. The third direct current end DC3 of the DC-DC converter 4 may be connected to the first direct current end DC1 of the first controller 51, to perform DC-DC conversion on the high-voltage direct current output by the first controller 51 through the first direct current end DC1. In addition, the third direct current end DC3 of the DC-DC converter 4 may alternatively be connected to the power battery 3, and further the first direct current end DC1 of the first controller 51 may be connected to the power battery 3, so that the first controller 51 outputs the high-voltage direct current to the power battery 3 through the first direct current end DC1 to charge the power battery 3. Further, the third direct current end DC3 of the DC-DC converter 4 may alternatively be connected to the second direct current end DC2 of the second controller 21, and further, the first direct current end DC1 of the first controller 51 may be connected to the second direct current end DC2 of the second controller 21, so that the first controller 51 outputs the high-voltage direct current to the second controller 21 through the first direct current end DC1 to supply power to the power motor 2.

Further, as shown in Fig. 3, the DC-DC converter 4 is further connected to a first electrical device 10 and a low-voltage storage battery 20 in the hybrid electric vehicle to supply power to the first electrical device 10 and the low-voltage storage battery 20, and the low-voltage storage battery 20 is further connected to the first electrical device 10.

In some embodiments, as shown in Fig. 3, the DC-DC converter 4 further includes a fourth direct current end DC4. The DC-DC converter 4 may convert the high-voltage direct current output by the power battery 3 and/or the high-voltage direct current output by the secondary motor 5 through the first controller 51 into a low-voltage direct current, and output the low-voltage direct current through the fourth direct current end DC4. That is, the DC-DC converter 4 may convert either or both of the high-voltage direct current output by the power battery 3 and the high-voltage direct current output by the secondary motor 5 through the first controller 51 into a low-voltage direct current, and output the low-voltage direct current through the fourth direct current end DC4. Further, the fourth direct current end DC4 of the DC-DC converter 4 may be connected to the first electrical device 10, to supply power to the first electrical device 10. The first electrical device 10 may be a low-voltage electric device, which includes, but is not limited to, a vehicle light, a radio, and the like.The fourth direct current end DC4 of the DC-DC converter 4 may be further connected to the low-voltage storage battery 20, to supply power to the low-voltage storage battery 20.

In addition, the low-voltage storage battery 20 is connected to the first electrical device 10, to supply power to the first electrical device 10. Particularly, when the secondary motor 5 stops generating power and the power battery 3 is faulty or has an insufficient electricity quantity, the low-voltage storage battery 20 may supply power to the first electrical device 10, to ensure low-voltage power usage of the whole vehicle, ensure that the whole vehicle can implement traveling in a pure fuel mode, and increase a traveling distance of the whole vehicle.

As stated above, the third direct current end DC3 of the DC-DC converter 4 is connected to the first controller 51, and the fourth direct current end DC4 of the DC-DC converter 4 is connected to the first electrical device 10 and the low-voltage storage battery 20 separately. When the power motor 2, the second controller 21, and the power battery 3 are faulty, the secondary motor 5 may generate power to supply power to the first electrical device 10 and/or charge the low-voltage storage battery 20 through the first controller 51 and the DC-DC converter 4, to enable the hybrid electric vehicle to travel in a pure-fuel mode.

In other words, when the power motor 2, the second controller 21, and the power battery 3 are faulty, the first controller 51 may convert an alternating current generated by the secondary motor 5 during power generation into a high-voltage direct current, the DC-DC converter 4 may convert the high-voltage direct current converted by the first controller 50 into a low-voltage direct current, to supply power to the first electrical device 10 and/or charge low-voltage storage battery 20, that is, to implement either or both of supplying power to the first electrical device 10 and charging the low-voltage storage battery 20.

Therefore, the secondary motor 5 and the DC-DC converter 4 have a single power supply channel. When the power motor 2, the second controller 21, and the power battery 3 are faulty, electric driving cannot be implemented. In this case, low-voltage power usage of the whole vehicle can be ensured through the single power supply channel of the secondary motor 5 and the DC-DC converter 4, to ensure low-voltage power usage of the whole vehicle, ensure that the whole vehicle can implement traveling in a pure fuel mode, and increase a traveling distance of the whole vehicle.

With reference to the embodiment of Fig. 3, the first controller 51, the second controller 21, and the power battery 3 are further separately connected to a second electrical device 30 of the hybrid electric vehicle.

In some embodiments, as shown in Fig. 3, the first direct current end DC1 of the first controller 51 may be connected to the second electrical device 30, and when generating power, the secondary motor 5 may directly supply power to the second electrical device 30 through the first controller 51. In other words, the AC-DC conversion unit of the first controller 51 may further convert an alternating current generated by the secondary motor 5 during power generation into a high-voltage direct current, and directly supply power to the second electrical device 30.

Similarly, the power battery 3 may be further connected to the second electrical device 30, to supply power to the second electrical device 30. That is, the high-voltage direct current output by the power battery 3 may be directly supplied to the second electrical device 30.

The second electrical device 30 may be a high-voltage electrical device, which includes, but is not limited to, an air conditioner compressor, a Positive Temperature Coefficient (PTC) heater, and the like.

As stated above, charging the power battery 3, supplying power to the power motor 2, or supplying power to the first electrical device 10 and the second electrical device 30 may be implemented through power generation of the secondary motor 5. In addition, the power battery 3 may supply power to the power motor 2 through the second controller 21, or supply power to the second electrical device 30, or supply power to the first electrical device 10 and/or low-voltage storage battery 20 through the DC-DC converter 4. Therefore, power supply modes of the whole vehicle are enriched, power demands of the whole vehicle under different working conditions are satisfied, and performance of the whole vehicle is improved.

It should be noted that in this embodiment of the present invention, a low voltage may refer to a voltage ranging from 12 V (volt) to 24 V, and a high voltage may refer to a voltage of 600 V, but is not limited thereto.

Therefore, in the power system of a hybrid power vehicle according to this embodiment of the present invention, the engine can be prevented from participating in driving at a low speed, and further, the clutch is not used, thereby reducing wear or slipping wear of the clutch while reducing jerks and improving comfortability. In addition, the engine can operate in an economic zone at a low speed, only generate power, and do not perform driving, thereby reducing fuel consumption, reducing engine noise, maintaining low-speed electric balance and low-speed smoothness of the whole vehicle, and improving performance of the whole vehicle. In addition, the secondary motor can directly charge the power battery, may also supply power to a low-voltage device such as the low-voltage storage battery and the first electrical device, and may also be used as a starter.

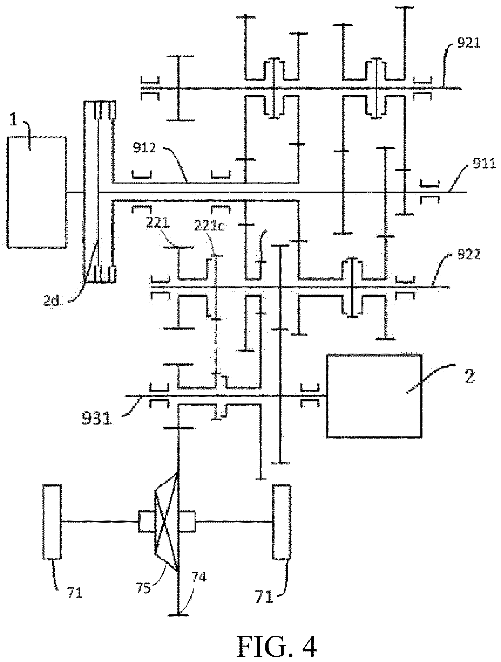

A specific embodiment of a power system of a hybrid electric vehicle is described below in detail with reference to Fig. 4. The embodiment is applicable to a power system in which the engine 1 and the power motor 2 drives a same wheel together, that is, a two-wheel-drive hybrid electric vehicle. It should be noted that, this embodiment mainly describes a specific transmission structure among the engine 1, the power motor 2, and the wheel 7, particularly, the structure of the transmission 90 in Fig. 2a. The remaining parts are basically the same as those in the embodiments of Fig. 1 and Fig. 3. Details are not described herein again.

It should be further noted that a plurality of input shafts, a plurality of output shafts, a motor power shaft 931, and relevant gears and gear shift elements on the shafts in the following embodiments may be used to constitute the transmission 90 in Fig. 2a.

In some embodiments, as shown in Fig. 1, Fig. 3, and Fig. 4, the power system of a hybrid electric vehicle mainly includes an engine 1, a power motor 2, a power battery 3, a DC-DC converter 4, a secondary motor 5, a plurality of input shafts (for example, a first input shaft 911 and a second input shaft 912), a plurality of output shafts (for example, a first output shaft 921 and a second output shaft 922), a motor power shaft 931, and relevant gears and gear shift elements (for example, a synchronizer) on the shafts.

As shown in Fig. 4, the engine 1 is configured to output power to a wheel 7 of the hybrid electric vehicle through a clutch 6, for example, a dual-clutch 2d show in FIG. 4. When power is transferred between the engine 1 and the input shaft, the engine 1 is configured to be selectively connected to at least one of a plurality of input shafts through the dual-clutch 2d. In other words, when transmitting power to the input shaft, the engine 1 can be selectively connected to one of the plurality of input shafts, or the engine 1 may be selectively connected two or more of the plurality of input shafts to transmit power.

For example, in the example of Fig. 4, the plurality of input shafts may include two input shafts, namely, a first input shaft 911 and a second input shaft 912. The second input shaft 912 may be coaxially sleeved over the first input shaft 911. The engine 1 can be selectively connected to one of the first input shaft 911 and the second input shaft 912 through the dual-clutch 2d, to transmit power. Alternatively, particularly, the engine 1 may be connected to both of the first input shaft 911 and the second input shaft 912 to transmit power. Certainly, it should be understood that the engine 1 may alternatively be disconnected from both of the first input shaft 911 and the second input shaft 912.

The plurality of output shafts may include two output shafts, namely, a first output shaft 921 and a second output shaft 922, and the first output shaft 921 and the second output shaft 922 are separately disposed in parallel to the first input shaft 911.

Transmission between the input shaft and the output shaft may be performed through a gear-position gear pair. For example, each input shaft is provided with a gear-position driving gear, that is, each of the first input shaft 911 and the second input shaft 912 is provided with a gear-position driving gear. Each output shaft is provided with a gear-position driven gear, that is, each of the first output shaft 921 and the second output shaft 922 is provided with a gear-position driven gear. The gear-position driven gear and the gear-position driving gear are correspondingly engaged with each other, thereby forming a plurality of different gear pairs with different speed ratio.

In some embodiments of the present invention, Six-gear-position transmission may be used between the input shaft and the output shaft, that is, a first-gear-position gear pair, a second-gear-position gear pair, a third-gear-position gear pair, a fourth-gear-position gear pair, a fifth-gear-position gear pair, and a sixth-gear-position gear pair are provided. However, the present invention is not limited to thereto. For a person of ordinary skill in the art, a quantity of gear-position gear pairs may be increased or decreased adaptively according to a transmission demand. This is not limited to the six-gear-position transmission shown in this embodiment of the present invention.

As shown in Fig. 4, the motor power shaft 931 is configured to be in linkage with one of a plurality of output shafts (for example, the first output shaft 921 the second output shaft 922), and through the linkage between the motor power shaft 931 and the output shaft, power may be transferred between the motor power shaft 931 and the output shaft. For example, power transferred through the output shaft (for example, power output from the engine 1) may be output to the motor power shaft 931, or power transferred through the motor power shaft 931 (for example, power output from the power motor 2) may be output to the output shaft.

It should be noted that the foregoing "linkage" may be understood as associated motions of a plurality of (for example, two) components. Using linkage of two components as an example, when one component moves, the other component also moves accordingly.

For example, in some embodiments of the present invention, linkage between a gear and a shaft may be understood as that when the gear rotates, the shaft that is in linkage with the gear also rotates, or when the shaft rotates, the gear that is in linkage with the shaft also rotates.

For another example, linkage between a shaft and a shaft may be understood as that when one shaft rotates, the other shaft that is in linkage with the one shaft also rotates.

For still another example, linkage between a gear and a gear may be understood as that when one gear rotates, the other gear that is in linkage with the one gear also rotates.

In the following descriptions related to "linkage" in the present invention, this understanding shall prevail if there is no special description.

Similarly, the power motor 2 is configured to be in linkage with the motor power shaft 931. For example, the power motor 2 may output generated power to the motor power shaft 931, so as to output driving power the wheel 7 of the hybrid electric vehicle through the motor power shaft 931.

It should be noted that in the description of the present invention, the motor power shaft 931 may be a motor shaft of the power motor 2. Certainly, it may be understood that, the motor power shaft 931 and the motor shaft of the power motor 2 may alternatively be two separate shafts.

In some embodiments, as shown in Fig. 4, an output portion 221 may differentially rotate relative to one of the output shafts (for example, the second output shaft 922). In other words, the output portion 221 and the output shaft can independently rotate at different revolution speeds.

Further, the output portion 221 is configured to be selectively connected to one of the output shafts to rotate synchronously with the output shaft. In other words, the output portion 221 can rotate differentially or synchronously relative to the output shaft. In brief, the output portion 221 may be connected to one of the output shafts to rotate synchronously, and certainly, may alternatively be disconnected from the output shaft to rotate differentially.

As shown in Fig. 4, the output portion 221 may be freely sleeved over one of the output shafts, but is not limited thereto. For example, in the example of Fig. 4, the output portion 221 is freely sleeved over the second output shaft 922. That is, the output portion 221 and the second output shaft 922 can rotate differentially at different revolution speeds.

As stated above, the output portion 221 may rotate synchronously with one of the output shafts. For example, the output portion 221 may be synchronized with the output shaft by adding a corresponding synchronizer when necessary. The synchronizer may be an output portion synchronizer 221c. The output portion synchronizer 221c is configured to synchronize the output portion 221 with one of the output shafts.

In some embodiments, the power motor 2 is configured to output driving power to the wheel 7 of the hybrid electric vehicle, and the engine 1 and the power motor 2 drive a same wheel of the hybrid electric vehicle together. With reference to the example of Fig. 4, a differential 75 of a vehicle may be disposed between a pair of front wheels 71 or between a pair of rear wheels 72. In some examples of the present invention, when the power motor 2 drives a pair of front wheels 71, the differential 75 may be located between the pair of front wheels 71.

An effect of the differential 75 is to enable left and right driving wheels to roll at different angular velocities when the vehicle is turning or driving on an uneven road surface to ensure pure rolling motion between the driving wheels on two sides and the ground. The differential 75 is provided with a main reducer driven gear 74 of the main reducer 9. For example, the main reducer driven gear 74 may be disposed on a housing of the differential 75. The main reducer driven gear 74 may be a bevel gear, but is not limited thereto.

In some embodiments, as shown in Fig. 1, the power battery 3 is configured to supply power to the power motor 2. The secondary motor 5 is connected to the engine 1, and the secondary motor 5 is further connected to the power motor 2, the DC-DC converter 4, and the power battery 3 separately, and when being actuated by the engine 1 to generate power, the secondary motor 5 implements at least one of charging the power battery 3, supplying power to the power motor 2, and supplying power to the DC-DC converter 4.

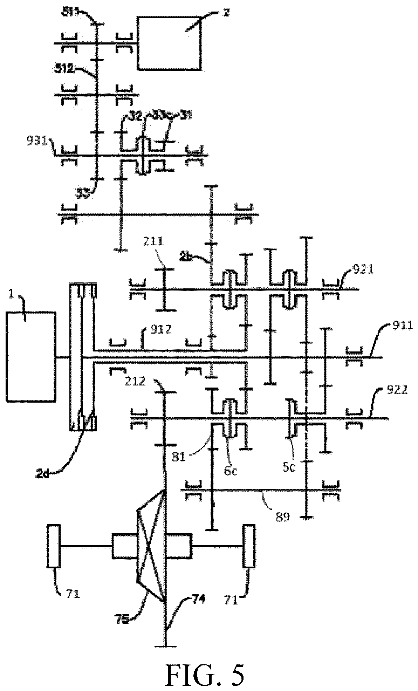

Another specific embodiment of a power system of a hybrid electric vehicle is further described below in detail with reference to Fig. 5. The embodiment is also applicable to a power system in which the engine 1 and the power motor 2 drives a same wheel together, that is, a two-wheel-drive hybrid electric vehicle. It should be noted that, this embodiment mainly describes a specific transmission structure among the engine 1, the power motor 2, and the wheel 7, particularly, the structure of the transmission 90 in Fig. 2a. The remaining parts are basically the same as those in the embodiments of Fig. 1 and Fig. 3. Details are not described herein again.

It should be further noted that a plurality of input shafts, a plurality of output shafts, a motor power shaft 931, and relevant gears and gear shift elements on the shafts in the following embodiments may be used to constitute the transmission 90 in Fig. 2a.

In some embodiments, as shown in Fig. 1, Fig. 3, and Fig. 5, the power system of a hybrid electric vehicle mainly includes an engine 1, a power motor 2, a power battery 3, a DC-DC converter 4, a secondary motor 5, a plurality of input shafts (for example, a first input shaft 911 and a second input shaft 912), a plurality of output shafts (for example, a first output shaft 921 and a second output shaft 922), a motor power shaft 931, and relevant gears and gear shift elements (for example, a synchronizer) on the shafts.

As shown in Fig. 5, the engine 1 is configured to output power to a wheel 7 of the hybrid electric vehicle through a clutch 6, for example, a dual-clutch 2d show in FIG. 4. When power is transferred between the engine 1 and the input shaft, the engine 1 is configured to be selectively connected to at least one of a plurality of input shafts through the dual-clutch 2d. In other words, when transmitting power to the input shaft, the engine 1 can be selectively connected to one of the plurality of input shafts, or the engine 1 may be selectively connected two or more of the plurality of input shafts to transmit power.

For example, in the example of Fig. 5, the plurality of input shafts may include two input shafts, namely, a first input shaft 911 and a second input shaft 912. The second input shaft 912 may be coaxially sleeved over the first input shaft 911. The engine 1 can be selectively connected to one of the first input shaft 911 and the second input shaft 912 through the dual-clutch 2d, to transmit power. Alternatively, particularly, the engine 1 may be connected to both of the first input shaft 911 and the second input shaft 912 to transmit power. Certainly, it should be understood that the engine 1 may alternatively be disconnected from both of the first input shaft 911 and the second input shaft 912.

The plurality of output shafts may include two output shafts, namely, a first output shaft 921 and a second output shaft 922, and the first output shaft 921 and the second output shaft 922 are disposed in parallel to the first input shaft 911.

Transmission between the input shaft and the output shaft may be performed through a gear-position gear pair. For example, each input shaft is provided with a gear-position driving gear, that is, each of the first input shaft 911 and the second input shaft 912 is provided with a gear-position driving gear. Each output shaft is provided with a gear-position driven gear, that is, each of the first output shaft 921 and the second output shaft 922 is provided with a gear-position driven gear. The gear-position driven gear and the gear-position driving gear are correspondingly engaged with each other, thereby forming a plurality of different gear pairs with different speed ratio.

In some embodiments of the present invention, Six-gear-position transmission may be used between the input shaft and the output shaft, that is, a first-gear-position gear pair, a second-gear-position gear pair, a third-gear-position gear pair, a fourth-gear-position gear pair, a fifth-gear-position gear pair, and a sixth-gear-position gear pair are provided. However, the present invention is not limited to thereto. For a person of ordinary skill in the art, a quantity of gear-position gear pairs may be increased or decreased adaptively according to a transmission demand. This is not limited to the six-gear-position transmission shown in this embodiment of the present invention.

As shown in Fig. 5, one of the output shafts (for example, the first output shaft 921 and the second output shaft 922) is freely sheathed with at least one reverse-gear-position output gear 81, and the output shaft is further provided with a reverse-gear-position synchronizer for connecting the reverse-gear-position output gear 81 (for example, a fifth-gear-position synchronizer 5c and a sixth-gear-position synchronizer 6c). In other words, the reverse-gear-position synchronizer synchronizes the corresponding reverse-gear-position output gear 81 with the output shaft, so that the output shaft and the reverse-gear-position output gear 81 synchronized by the reverse-gear-position synchronizer can rotate synchronously, so that reverse-gear-position power can be output from the output shaft.

In some embodiments, as shown in Fig. 5, there is one reverse-gear-position output gear 81, and the one reverse-gear-position output gear 81 may be freely sleeved over the second output shaft 922. However, this is not limited in the present invention. In some other embodiments, there are two reverse-gear-position output gears 81, and the two reverse-gear-position output gears 81 may both be freely sleeved over the second output shaft 922. Certainly, it may be understood that there may alternatively be three or more reverse-gear-position output gears 81.

A reverse-gear-position shaft 89 is configured to be in linkage with one of the input shafts (for example, the first input shaft 911 and the second input shaft 912) and further in linkage with at least one reverse-gear-position output gear 81. For example, power transferred through one of the input shafts may be transferred to the reverse-gear-position output gear 81 through the reverse-gear-position shaft 89, so that reverse-gear-position power can be output from the reverse-gear-position output gear 81. In all the examples of the present invention, the reverse-gear-position output gear 81 is freely sleeved over the second output shaft 922, and the reverse-gear-position shaft 89 is in linkage with the first input shaft 911. For example, reverse-gear-position power output by the engine 1 may be output to the reverse-gear-position output gear 81 through the first input shaft 911 and the reverse-gear-position shaft 89.

The motor power shaft 931 is described in detail below. The motor power shaft 931 is freely sheathed with a motor-power-shaft first gear 31 and a motor-power-shaft second gear 32. The motor-power-shaft first gear 31 may be engaged with the main reducer driven gear 74 for transmission, to transmit driving power to the wheel 7 of the hybrid electric vehicle.

The motor-power-shaft second gear 32 is configured to be in linkage with one of the gear-position driven gears. When a hybrid electric vehicle having the power system according to this embodiment of the present invention is in some working conditions, power output by a power source may be transferred between the motor-power-shaft second gear 32 and the gear-position driven gear that is in linkage with the motor-power-shaft second gear 32. In this case, the motor-power-shaft second gear 32 is in linkage with the gear-position driven gear. For example, if the motor-power-shaft second gear 32 is in linkage with a second-gear-position driven gear 2b, the motor-power-shaft second gear 32 and the second-gear-position driven gear 2b may be directly engaged with each other or may perform indirect transmission through an intermediate transmission component.

Further, the motor power shaft 931 is further provided with a motor power shaft synchronizer 33c. The motor power shaft synchronizer 33c is located between the motor-power-shaft first gear 31 and the motor-power-shaft second gear 32, and the motor power shaft synchronizer 33c may selectively engage the motor-power-shaft first gear 31 or the motor-power-shaft second gear 32 with the motor power shaft 3. For example, in the example of Fig. 5, a connection sleeve of the motor power shaft synchronizer 33c may connect to the motor-power-shaft second gear 32 when moving leftward, and may connect to the motor-power-shaft first gear 31 when moving rightward.

Similarly, the power motor 2 is configured to be in linkage with the motor power shaft 931. For example, the power motor 2 may output generated power to the motor power shaft 931, so as to output driving power the wheel 7 of the hybrid electric vehicle through the motor power shaft 931.

For the motor-power-shaft first gear 31, because it is engaged with the main reducer driven gear 74, the power motor 2 may be connected to the motor-power-shaft first gear 31 through the motor power shaft synchronizer 33c to directly output generated power from the motor-power-shaft first gear 31. In this way, a transmission chain is shortened, intermediate transmission components are reduced, and transmission efficiency is improved.

Second, transmission manners of the motor power shaft 931 and the power motor 2 are described in detail with reference to specific embodiments.

In some embodiments, as shown in Fig. 5, A motor-power-shaft third gear 33 is further fixedly disposed on the motor power shaft 931, and the power motor 2 is configured to perform direct engagement and transmission or indirect transmission with the motor-power-shaft third gear 33.

Further, a first motor gear 511 is disposed on the motor shaft of the power motor 2, and the first motor gear 511 performs transmission with the motor-power-shaft third gear 33 through an intermediate gear 512. For another example, the power motor 2 may alternatively be connected to the motor power shaft 931 coaxially.

In some embodiments, the power motor 2 is configured to output driving power to the wheel 7 of the hybrid electric vehicle, and the engine 1 and the power motor 2 drive a same wheel of the hybrid electric vehicle together. With reference to the example of Fig. 5, a differential 75 of a vehicle may be disposed between a pair of front wheels 71 or between a pair of rear wheels 72. In some examples of the present invention, when the power motor 2 drives a pair of front wheels 71, the differential 75 may be located between the pair of front wheels 71.

An effect of the differential 75 is to enable left and right driving wheels to roll at different angular velocities when the vehicle is turning or driving on an uneven road surface to ensure pure rolling motion between the driving wheels on two sides and the ground. The differential 75 is provided with a main reducer driven gear 74 of the main reducer 9. For example, the main reducer driven gear 74 may be disposed on a housing of the differential 75. The main reducer driven gear 74 may be a bevel gear, but is not limited thereto.

Further, a first-output-shaft output gear 211 is fixedly disposed on the first output shaft 921, the first-output-shaft output gear 211 moves synchronously with the first output shaft 921, and the first-output-shaft output gear 211 is engaged with the main reducer driven gear 74 for transmission, so that power transferred through the first output shaft 921 can be transferred from the first-output-shaft output gear 211 to the main reducer driven gear 74 and the differential 75.

Similarly, a second-output-shaft output gear 212 is fixedly disposed on the second output shaft 922, the second-output-shaft output gear 212 moves synchronously with the second output shaft 922, and the second-output-shaft output gear 212 is engaged with the main reducer driven gear 74 for transmission, so that power transferred through the second output shaft 922 can be transferred from the second-output-shaft output gear 212 to the main reducer driven gear 74 and the differential 75.

Similarly, the motor-power-shaft first gear 31 may be configured to output power transferred through the motor power shaft 931. Therefore, the motor-power-shaft first gear 31 is also engaged with the main reducer driven gear 74 for transmission.

In some embodiments, as shown in Fig. 1, the power battery 3 is configured to supply power to the power motor 2. The secondary motor 5 is connected to the engine 1, and the secondary motor 5 is further connected to the power motor 2, the DC-DC converter 4, and the power battery 3 separately, and when being actuated by the engine 1 to generate power, the secondary motor 5 implements at least one of charging the power battery 3, supplying power to the power motor 2, and supplying power to the DC-DC converter 4.

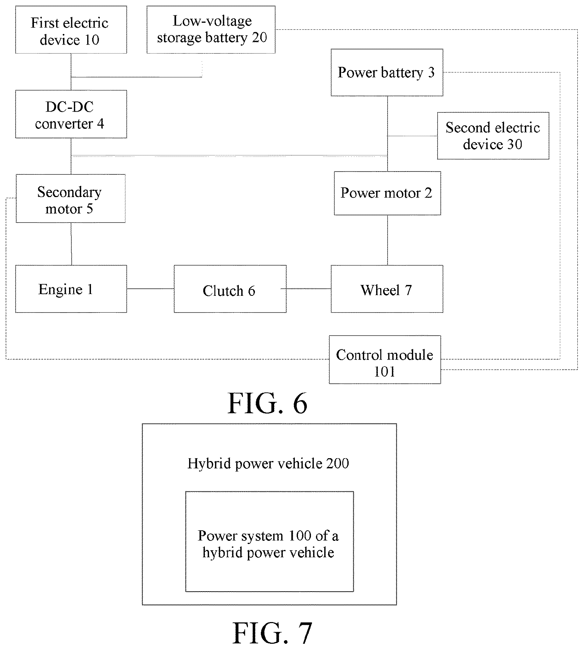

Further, as shown in Fig. 6, the power system of the hybrid electric vehicle further includes a control module 101. The control module 101 is configured to control the power system of the hybrid electric vehicle. It should be understood that the control module 101 may be an assembly of controllers having a control function in the hybrid electric vehicle, for example, may be an assembly of a vehicle control unit of the hybrid electric vehicle and the first controller 51 and the second controller 21 in the embodiment of Fig. 3. However, this is not limited thereto. A control method performed by the control module 101 is described below in detail.

In some embodiments of the present invention, the control module 101 is configured t obtain a state of charge (SOC, also referred to as a remaining electricity quantity) value of the power battery 3, an SOC value of the low-voltage storage battery 20, and a maximum allowable generating power of the secondary motor 5, and determine, according to the SOC value of the power battery 3, the SOC value of the low-voltage storage battery 20, and the maximum allowable generating power of the secondary motor 5 whether the secondary motor 5 charges the power battery 3 and/or the low-voltage storage battery 20.

It should be noted that the SOC value of the power battery 3 and the SOC value of the low-voltage storage battery 20 may be collected through a battery management system of the hybrid electric vehicle, so that the battery management system sends the collected SOC value of the power battery 3 and SOC value of the low-voltage storage battery 20 to the control module 101, to enable the control module 101 to obtain the SOC value of the power battery 3 and the SOC value of the low-voltage storage battery 20.

Therefore, power demands of the power motor and a high-voltage electrical device may be satisfied by charging the power battery, so as to ensure that the power motor drives the whole vehicle to normally travel. In addition, a power demand of a low-voltage electrical device may be satisfied by charging low-voltage storage battery. In addition, when the secondary motor stops generating power and the power battery is faulty or has an insufficient electricity quantity, low-voltage power supply for the whole vehicle may be implemented through the low-voltage storage battery, to further ensure that the whole vehicle can implement traveling in a pure fuel mode, and increase a traveling distance of the whole vehicle.

According to a specific example of the present invention, the maximum allowable generating power of the secondary motor 5 is related to performance parameters and the like of the secondary motor 5 and the engine 1. In other words, the maximum allowable generating power of the secondary motor 5 may be preset according to the performance parameters of the secondary motor 5 and the engine 1.

Further, in an embodiment of the present invention, the control module 101 is further configured to: when the SOC value of the power battery 3 is less than a first preset SOC value, and the SOC value of the low-voltage storage battery 20 is greater than or equal to a second preset SOC value, control the engine 1 to actuate the secondary motor 5 to generate power to charge the power battery 3.

It should be understood that, the first preset SOC value may be a charging limit value of the power battery 3, the second preset SOC value may be a charging limit value of the low-voltage storage battery 20, and the first preset SOC value and the second preset SOC value may be independently set according to performance of each battery, and may be a same value or different values.

Specifically, after obtaining the SOC value of the power battery 3 and the SOC value of the low-voltage storage battery 20, the control module 101 may determine whether the SOC value of the power battery 3 is less than the first preset SOC value and determine whether the SOC value of the low-voltage storage battery 20 is less than the second preset SOC value, and if the SOC value of the power battery 3 is less than the first preset SOC value, and the SOC value of the low-voltage storage battery 20 is greater than or equal to the second preset SOC value, it indicates that a remaining electricity quantity of the power battery 3 is relatively low, and the power battery 3 needs to be charged, and a remaining electricity quantity of the low-voltage storage battery 20 is relatively high, the low-voltage storage battery 20 does not need to be charged. In this case, the control module 101 controls the engine 1 to actuate the secondary motor 5 to generate power to charge the power battery 3.

As stated above, the secondary motor 5 is a high-voltage motor. For example, a generating voltage of the secondary motor 5 is equivalent to a voltage of the power battery 3, so that the electric energy generated by the secondary motor 5 can be directly used to charge the power battery 3 without being subjected to voltage conversion.

Similarly, the control module 101 is further configured to: when the SOC value of the power battery 3 is less than the first preset SOC value, and the SOC value of the low-voltage storage battery 20 is greater than or equal to the second preset SOC value, control the engine 1 to actuate the secondary motor 5 to generate power to charge the low-voltage storage battery 20 through the DC-DC converter 4.

That is, if the SOC value of the power battery 3 is greater than or equal to the first preset SOC value, and the SOC value of the low-voltage storage battery 20 is less than the second preset SOC value, it indicates that a remaining electricity quantity of the power battery 3 is relatively high, and the power battery 3 does not need to be charged, but a remaining electricity quantity of the low-voltage storage battery 20 is relatively low, and the low-voltage storage battery 20 needs to be charged. In this case, the control module 101 controls the engine 1 to actuate the secondary motor 5 to generate power to charge the low-voltage storage battery 20 through the DC-DC converter 4.

As stated above, the secondary motor 5 is a high-voltage motor. For example, a generating voltage of the secondary motor 5 is equivalent to a voltage of the power battery 3, so that the electric energy generated by the secondary motor 5 needs to be subjected to voltage conversion by the DC-DC converted 4 and then, used to charge the low-voltage storage battery 20.

Further, in an embodiment of the present invention, the control module 101 is further configured to: when the SOC value of the power battery 3 is less than a first preset SOC value, and the SOC value of the low-voltage storage battery 20 is less than a second preset SOC value, obtain a charging power of the power battery 3 according to the SOC value of the power battery 3, and obtain a charging power of the low-voltage storage battery 20 according to the SOC value of the low-voltage storage battery 20, and when a sum of the charging power of the power battery 3 and the charging power of the low-voltage storage battery 20 is greater than maximum allowable generating power of the secondary motor 5, control the engine 1 to actuate the secondary motor 5 to generate power to charge the low-voltage storage battery 20 through the DC-DC converter 4.

In addition, the control module 101 is further configured to: when the sum of the charging power of the power battery 3 and the charging power of the low-voltage storage battery 20 is less than or equal to the maximum allowable generating power of the secondary motor 5, control the engine 1 to actuate the secondary motor 5 to generate power to charge the power battery 3 while charging the low-voltage storage battery 20 through the DC-DC converter 4.

That is, if the SOC value of the power battery 3 is less than the first preset SOC value, and the SOC value of the low-voltage storage battery 20 is less than the second preset SOC value, it indicates that remaining electricity quantities of both the power battery 3 and the low-voltage storage battery 20 are relatively low, and they need to be charged. In this case, the control module 101 calculates the charging power of the power battery 3 according to the SOC value of the power battery 3, calculates the charging power of the low-voltage storage battery 20 according to the SOC value of the low-voltage storage battery 20, and further, determines whether a sum of the charging power of the power battery 3 and the charging power of the low-voltage storage battery 20 is greater than the maximum allowable generating power of the secondary motor 5.

If the sum of the charging power of the power battery 3 and the charging power of the low-voltage storage battery 20 is greater than the maximum allowable generating power of the secondary motor 5, it indicates that the electric energy that the secondary motor 5 can generate is insufficient for charging the two batteries simultaneously. In this case, the low-voltage storage battery 20 is preferentially charged. That is, the engine 1 actuates the secondary motor 5 to generate power to charge the low-voltage storage battery 20 through the DC-DC converter 4.

If the sum of the charging power of the power battery 3 and the charging power of the low-voltage storage battery 20 is less than or equal to the maximum allowable generating power of the secondary motor 5, it indicates that the electric energy that the secondary motor 5 can generate is sufficient for charging the two batteries simultaneously. In this case, the power battery 3 and the low-voltage storage battery 20 are charged simultaneously. That is, the engine 1 actuates the secondary motor 5 to generate power to charge the power battery 3 while charging the low-voltage storage battery 20 through the DC-DC converter 4.

In this way, the low-voltage storage battery is preferentially charged, to preferentially satisfy a power demand of a low-voltage electrical device, thereby ensuring that the whole vehicle can implement traveling in a pure fuel mode, and increasing a traveling distance of the whole vehicle.

Certainly, it should be understood that, when the SOC value of the power battery 3 is greater than or equal to the first preset SOC value, and the SOC value of the low-voltage storage battery 20 is greater than or equal to the second preset SOC value, it indicates that remaining electricity quantities of both the power battery 3 and the low-voltage storage battery 20 are relatively high, and they do not need to be charged. In this case, the power battery 3 and the low-voltage storage battery 20 may not be charged.

As stated above, during a traveling process of the hybrid electric vehicle, the control module 101 may obtain the SOC value of the power battery 3 and the SOC value of the low-voltage storage battery 20 in real time and perform determining on the SOC value of the power battery 3 and the SOC value of the low-voltage storage battery 20. Determining results are classified into the following four cases:
First case: The remaining electricity quantity of the power battery 3 is relatively low, and the remaining electricity quantity of the low-voltage storage battery 20 is relatively high, that is, the SOC value of the power battery 3 is less than the first preset SOC value, and the SOC value of the low-voltage storage battery 20 is greater than or equal to the second preset SOC value. In this case, the control module 101 controls the engine 1 to actuate the secondary motor 5 to generate power to charge the power battery 3.
Second case: The remaining electricity quantity of the power battery 3 is relatively high, and the remaining electricity quantity of the low-voltage storage battery 20 is relatively low, that is, the SOC value of the power battery 3 is greater than or equal to the first preset SOC value, and the SOC value of the low-voltage storage battery 20 is less than the second preset SOC value. In this case, the control module 101 controls the engine 1 to actuate the secondary motor 5 to generate power to charge the low-voltage storage battery 20 through the DC-DC converter 4.
Third case: Remaining electricity quantities of both the power battery 3 and the low-voltage storage battery 20 are relatively low, that is, the SOC value of the power battery 3 is less than the first preset SOC value and the SOC value of the low-voltage storage battery 20 is less than the second preset SOC value. In this case, whether to charge the power battery 3 may be determined according to the maximum allowable generating power of the secondary motor 5 (the low-voltage storage battery 20 is preferentially charged). If the sum of the charging power of the power battery 3 and the charging power of the low-voltage storage battery 20 is greater than the maximum allowable generating power of the secondary motor 5, the power battery 3 is not charged, and only the low-voltage storage battery 20 is charged, that is, the control module 101 controls the engine 1 to actuate the secondary motor 5 to generate power to charge the low-voltage storage battery 20 through the DC-DC converter 4. If the sum of the charging power of the power battery 3 and the charging power of the low-voltage storage battery 20 is less than or equal to the maximum allowable generating power of the secondary motor 5, the power battery 3 and the low-voltage storage battery 20 are charged simultaneously. That is, the control module 101 controls the engine 1 to actuate the secondary motor 5 to generate power to charge the power battery 3 while charging the low-voltage storage battery 20 through the DC-DC converter 4.
Fourth case: When remaining electricity quantities of both the power battery 3 and the low-voltage storage battery 20 are relatively high, that is, the SOC value of the power battery 3 is greater than or equal to the first preset SOC value, and the SOC value of the low-voltage storage battery 20 is greater than or equal to the second preset SOC value. In this case, the power battery 3 and the low-voltage storage battery 20 are charged.

In conclusion, according to the power system of a hybrid electric vehicle provided in this embodiment of the present invention, the engine outputs power to a wheel of the hybrid electric vehicle through the clutch, the power motor outputs driving power to a wheel of the hybrid electric vehicle, and the power battery supplies power to the power motor. When being actuated by the engine to generate power, the secondary motor implements at least one of charging the power battery, supplying power to the power motor, and supplying power to the DC-DC converter. The control module determines whether the secondary motor charges the power battery and/or the low-voltage storage battery according to an SOC value of the power battery, an SOC value of the low-voltage storage battery, and a maximum allowable generating power of the motor. Therefore, the engine can be prevented from participating in driving at a low speed, and further, the clutch is not used, thereby reducing wear or slipping wear of the clutch while reducing jerks and improving comfortability. In addition, the engine can operate in an economic zone at a low speed, only generate power, and do not perform driving, thereby reducing fuel consumption, reducing engine noise, maintaining low-speed electric balance and low-speed smoothness of the whole vehicle, and improving performance of the whole vehicle. In addition, the system not only can charge the power battery, but also can charge the low-voltage storage battery, so that power demands of the power motor and a high-voltage electrical device may be satisfied, so as to ensure that the power motor drives the whole vehicle to normally travel. In addition, a power demand of a low-voltage electrical device may be satisfied, so that when the secondary motor stops generating power and the power battery is faulty or has an insufficient electricity quantity, it is ensured that the whole vehicle can implement traveling in a pure fuel mode, and increase a traveling distance of the whole vehicle.

In addition, the embodiments of the present invention further provide a hybrid electric vehicle.

Fig. 7 is a schematic block diagram of a hybrid power vehicle according to an embodiment of the present invention. As shown in Fig. 7, the hybrid electric vehicle 200 includes the power system 100 of a hybrid electric vehicle of the foregoing embodiment.

According to the hybrid electric vehicle provided in this embodiment of the present invention, low-speed electric balance and low-speed smoothness of the whole vehicle can be maintained. In addition, the vehicle not only can charge the power battery, but also can charge the low-voltage storage battery.

Based on the hybrid electric vehicle and the power system thereof in the foregoing embodiments, this embodiment of the present invention further provides a power generation control method of a hybrid electric vehicle.

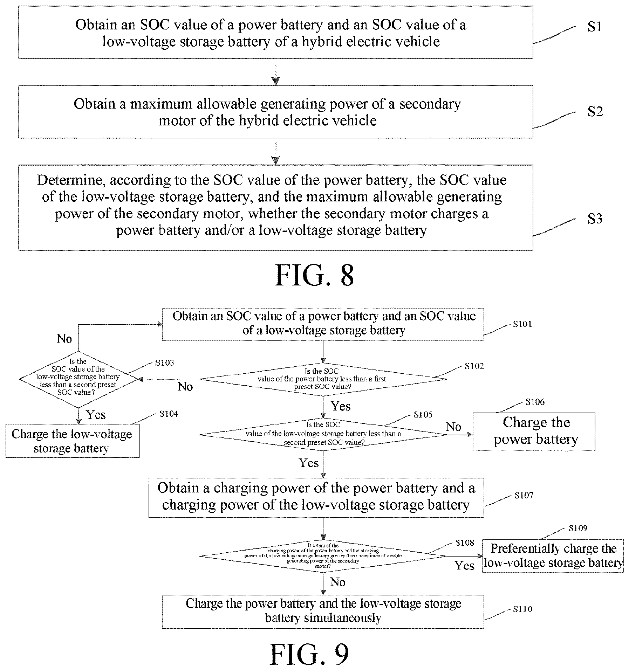

Fig. 8 is a flowchart of a power generation control method of a hybrid power vehicle according to an embodiment of the present invention. As shown in Fig. 8, the power generation control method of a hybrid electric vehicle includes the following steps.

S1: Obtain an SOC value of a power battery and an SOC value of a low-voltage storage battery of the hybrid electric vehicle.

It should be noted that the SOC value of the power battery and the power battery of the low-voltage storage battery may be collected through the battery management system of the hybrid electric vehicle, to obtain the SOC value of the power battery and the power battery of the low-voltage storage battery.

S2: Obtain a maximum allowable generating power of a secondary motor of the hybrid electric vehicle.

According to a specific example of the present invention, the maximum allowable generating power of the secondary motor is related to performance parameters and the like of the secondary motor and the engine. In other words, the maximum allowable generating power of the secondary motor may be preset according to the performance parameters of the secondary motor and the engine.

S3: Determine, according to the SOC value of the power battery, the SOC value of the low-voltage storage battery, and the maximum allowable generating power of the secondary motor, whether the secondary motor charges the power battery and/or the low-voltage storage battery.

Therefore, power demands of the power motor and a high-voltage electrical device may be satisfied by charging the power battery, so as to ensure that the power motor drives the whole vehicle to normally travel. In addition, a power demand of a low voltage electrical device may be satisfied by charging low-voltage storage battery. In addition, when the secondary motor stops generating power and the power battery is faulty or has an insufficient electricity quantity, low-voltage power supply for the whole vehicle may be implemented through the low-voltage storage battery, to further ensure that the whole vehicle can implement traveling in a pure fuel mode, and increase a traveling distance of the whole vehicle.

Further, in an embodiment of the present invention, when the SOC value of the power battery is less than a first preset SOC value, and the SOC value of the low-voltage storage battery is greater than or equal to a second preset SOC value, the engine is controlled to actuate the secondary motor to generate power to charge the power battery.

It should be understood that, the first preset SOC value may be a charging limit value of the power battery, the second preset SOC value may be a charging limit value of the low-voltage storage battery, and the first preset SOC value and the second preset SOC value may be independently set according to performance of each battery.

Specifically, after the SOC value of the power battery and the SOC value of the low-voltage storage battery are obtained, whether the SOC value of the power battery is less than the first preset SOC value may be determined, and whether the SOC value of the low-voltage storage battery is less than the second preset SOC value may be determined, and if the SOC value of the power battery is less than the first preset SOC value, and the SOC value of the low-voltage storage battery is greater than or equal to the second preset SOC value, it indicates that a remaining electricity quantity of the power battery is relatively low, and the power battery needs to be charged, and a remaining electricity quantity of the low-voltage storage battery is relatively high, the low-voltage storage battery does not need to be charged. In this case, the control module controls the engine to actuate the secondary motor to generate power to charge the power battery.

As stated above, the secondary motor is a high-voltage motor. For example, a generating voltage of the secondary motor is equivalent to a voltage of the power battery, so that the electric energy generated by the secondary motor can be directly used to charge the power battery without being subjected to voltage conversion.

Similarly, when the SOC value of the power battery is greater than or equal to a first preset SOC value, and the SOC value of the low-voltage storage battery is less than a second preset SOC value, the engine of the hybrid power vehicle is controlled to actuate the secondary motor to generate power to charge the low-voltage storage battery through the DC-DC converter of the hybrid power vehicle.

That is, if the SOC value of the power battery is greater than or equal to the first preset SOC value, and the SOC value of the low-voltage storage battery is less than the second preset SOC value, it indicates that a remaining electricity quantity of the power battery is relatively high, and the power battery does not need to be charged, but a remaining electricity quantity of the low-voltage storage battery is relatively low, and the low-voltage storage battery needs to be charged. In this case, the control module controls the engine to actuate the secondary motor to generate power to charge the low-voltage storage battery through the DC-DC converter.

As stated above, the secondary motor is a high-voltage motor. For example, a generating voltage of the secondary motor is equivalent to a voltage of the power battery, so that the electric energy generated by the secondary motor needs to be subjected to voltage conversion by the DC-DC converted and then, used to charge the low-voltage storage battery.

Further, in an embodiment of the present invention, when the SOC value of the power battery is less than a first preset SOC value, and the SOC value of the low-voltage storage battery is less than a second preset SOC value, a charging power of the power battery is obtained according to the SOC value of the power battery, and a charging power of the low-voltage storage battery is obtained according to the SOC value of the low-voltage storage battery, and when a sum of the charging power of the power battery and the charging power of the low-voltage storage battery is greater than maximum allowable generating power of the secondary motor, the engine is controlled to actuate the secondary motor to generate power to charge the low-voltage storage battery through the DC-DC converter.

In addition, when the sum of the charging power of the power battery and the charging power of the low-voltage storage battery is less than or equal to the maximum allowable generating power of the secondary motor, the engine is controlled to actuate the secondary motor to generate power to charge the power battery while the low-voltage storage battery is charged through the DC-DC converter.

That is, if the SOC value of the power battery is less than the first preset SOC value, and the SOC value of the low-voltage storage battery is less than the second preset SOC value, it indicates that remaining electricity quantities of both the power battery and the low-voltage storage battery are relatively low, they need to be charged. In this case, whether a sum of the charging power of the power battery and the charging power of the low-voltage storage battery is greater than the maximum allowable generating power of the secondary motor is determined.

If the sum of the charging power of the power battery and the charging power of the low-voltage storage battery is greater than the maximum allowable generating power of the secondary motor, it indicates that the electric energy that the secondary motor can generate is insufficient for charging the two batteries simultaneously. In this case, the low-voltage storage battery is preferentially charged. That is, the engine actuates the secondary motor to generate power to charge the low-voltage storage battery through the DC-DC converter.

If the sum of the charging power of the power battery and the charging power of the low-voltage storage battery is less than or equal to the maximum allowable generating power of the secondary motor, it indicates that the electric energy that the secondary motor can generate is sufficient for charging the two batteries simultaneously. In this case, the power battery and the low-voltage storage battery are charged simultaneously. That is, the engine actuates the secondary motor to generate power to charge the power battery while charging the low-voltage storage battery through the DC-DC converter.

In this way, the low-voltage storage battery is preferentially charged, to preferentially satisfy a power demand of a low-voltage electrical device, thereby ensuring that the whole vehicle can implement traveling in a pure fuel mode, and increasing a traveling distance of the whole vehicle.

Certainly, it should be understood that, when the SOC value of the power battery is greater than or equal to the first preset SOC value, and the SOC value of the low-voltage storage battery is greater than or equal to the second preset SOC value, it indicates that remaining electricity quantities of both the power battery and the low-voltage storage battery are relatively high, and they do not need to be charged. In this case, the power battery and the low-voltage storage battery may not be charged.

Specifically, as shown in Fig. 9, the power generation control method of a hybrid electric vehicle of this embodiment of the present invention specifically includes the following steps.
S101: Obtain an SOC value of a power battery and an SOC value of a low-voltage storage battery.
S102: Determine whether the SOC value of the power battery is less than a first preset SOC value.

If yes, step S105 is performed; and if not, step S103 is performed.

S103: Determine whether the SOC value of the low-voltage storage battery is less than a second preset SOC value.

If yes, step S104 is performed; and if not, step S101 is performed.
S104: Charge the low-voltage storage battery, that is, control the engine to actuate the secondary motor to generate power to charge the low-voltage storage battery through the DC-DC converter.
S105: Determine whether the SOC value of the low-voltage storage battery is less than a second preset SOC value.

If yes, step S107 is performed; and if not, step S106 is performed.
S106: Charge the power battery, that is, control the engine to actuate the secondary motor to generate power to charge the power battery.
S107: Obtain a charging power of the power battery and a charging power of the low-voltage storage battery.
S108: Determine whether a sum of the charging power of the power battery and the charging power of the low-voltage storage battery is greater than a maximum allowable generating power of the secondary motor.

If yes, step S109 is performed; and if not, step S110 is performed.
S109: Preferentially charge the low-voltage storage battery, that is, control the engine to actuate the secondary motor to generate power to charge the low-voltage storage battery through the DC-DC converter.
S110: Charge the power battery and the low-voltage storage battery simultaneously, that is, control the engine to actuate the secondary motor to generate power to charge the power battery while charging the low-voltage storage battery through the DC-DC converter.

In conclusion, according to the power generation control method of a hybrid electric vehicle provided in this embodiment of the present invention, whether the secondary motor charges the power battery and/or the low-voltage storage battery is determined according to an SOC value of the power battery, an SOC value of the low-voltage storage battery, and a maximum allowable generating power of the motor. In addition, in this method, not only the power battery can be charged, but also the low-voltage storage battery can be charged, so that power demands of the power motor and a high-voltage electrical device may be satisfied, so as to ensure that the power motor drives the whole vehicle to normally travel. In addition, a power demand of a low-voltage electrical device may be satisfied, so that when the secondary motor stops generating power and the power battery is faulty or has an insufficient electricity quantity, it is ensured that the whole vehicle can implement traveling in a pure fuel mode, and increase a traveling distance of the whole vehicle.

Finally, the embodiments of the present invention further provide a computer-readable storage medium, including an instruction stored therein, where when the instruction is executed, the hybrid electric vehicle performs power generation control method according to any one of the foregoing embodiments.

Although the embodiments of the present invention are shown and described above, it can be understood that, the foregoing embodiments are exemplary, and cannot be construed as a limitation to the present invention. Within the scope of the present invention, a person of ordinary skill in the art may make changes, modifications, replacement, and variations to the foregoing embodiments.

## Claims

1. A power system of a hybrid electric vehicle, comprising:
an engine, configured to output power to a wheel of the hybrid electric vehicle through a clutch;
a power motor, configured to output driving power to a wheel of the hybrid electric vehicle;
a power battery, configured to supply power to the power motor;
a DC-DC converter;
a low-voltage storage battery, connected to the low-voltage storage battery and the DC-DC converter;
a secondary motor, connected to the engine, wherein the secondary motor is connected to the power motor, the DC-DC converter, and the power battery separately, and the secondary motor is driven by the engine to generate power;
a control module, configured to obtain an SOC value of the power battery, an SOC value of the low-voltage storage battery, and a maximum allowable generating power of the secondary motor, and determine, according to the SOC value of the power battery, the SOC value of the low-voltage storage battery, and the maximum allowable generating power of the secondary motor, whether the secondary motor charges the power battery and/or the low-voltage storage battery.

2. The power system of a hybrid electric vehicle according to claim 1, wherein the control module is further configured to: when the SOC value of the power battery is less than a first preset SOC value, and the SOC value of the low-voltage storage battery is greater than or equal to a second preset SOC value, control the engine to actuate the secondary motor to generate power to charge the power battery.

3. The power system of a hybrid electric vehicle according to claim 1, wherein the control module is further configured to: when the SOC value of the power battery is greater than or equal to a first preset SOC value, and the SOC value of the low-voltage storage battery is less than a second preset SOC value, control the engine to actuate the secondary motor to generate power to charge the low-voltage storage battery through the DC-DC converter.

4. The power system of a hybrid electric vehicle according to claim 1, wherein the control module is further configured to: when the SOC value of the power battery is less than a first preset SOC value, and the SOC value of the low-voltage storage battery is less than a second preset SOC value, obtain a charging power of the power battery according to the SOC value of the power battery, and obtain a charging power of the low-voltage storage battery according to the SOC value of the low-voltage storage battery, and when a sum of the charging power of the power battery and the charging power of the low-voltage storage battery is greater than maximum allowable generating power of the secondary motor, control the engine to actuate the secondary motor to generate power to charge the low-voltage storage battery through the DC-DC converter.

5. The power system of a hybrid electric vehicle according to claim 4, the feature wherein, wherein the control module is further configured to: when the sum of the charging power of the power battery and the charging power of the low-voltage storage battery is less than or equal to the maximum allowable generating power of the secondary motor, control the engine to actuate the secondary motor to generate power to charge the power battery while charging the low-voltage storage battery through the DC-DC converter.

6. The power system of a hybrid electric vehicle according to any one of claims 1 to 5, wherein the engine and the power motor drive a same wheel of the hybrid electric vehicle together.

7. The power system of a hybrid electric vehicle according to any one of claims 1 to 6, wherein the wheel of the hybrid electric vehicle comprises a first wheel and a second wheel;
the engine is configured to output power to the first wheel of the hybrid electric vehicle through the clutch; and
the power motor is configured to output driving power to the second wheel of the hybrid electric vehicle.

8. A hybrid electric vehicle, comprising the power system of a hybrid electric vehicle according to any one of claims 1 to 7.

9. A power generation control method of a hybrid electric vehicle, comprising the following steps:
obtaining an SOC value of a power battery and an SOC value of a low-voltage storage battery of the hybrid electric vehicle;
obtaining a maximum allowable generating power of a secondary motor of the hybrid electric vehicle; and
determining, according to the SOC value of the power battery, the SOC value of the low-voltage storage battery, and the maximum allowable generating power of the secondary motor, whether the secondary motor charges the power battery and/or the low-voltage storage battery.

10. The power generation control method of a hybrid electric vehicle according to claim 9, wherein when the SOC value of the power battery is less than a first preset SOC value, and the SOC value of the low-voltage storage battery is greater than or equal to a second preset SOC value, an engine of the hybrid electric vehicle is controlled to actuate the secondary motor to generate power to charge the power battery.

11. The power generation control method of a hybrid electric vehicle according to claim 9, wherein when the SOC value of the power battery is greater than or equal to a first preset SOC value, and the SOC value of the low-voltage storage battery is less than a second preset SOC value, the engine of the hybrid electric vehicle is controlled to actuate the secondary motor to generate power to charge the low-voltage storage battery through a DC-DC converter of the hybrid electric vehicle.

12. The power generation control method of a hybrid electric vehicle according to claim 9, wherein when the SOC value of the power battery is less than a first preset SOC value and the SOC value of the low-voltage storage battery is less than a second preset SOC value, a charging power of the power battery is obtained according to the SOC value of the power battery, and a charging power of the low-voltage storage battery is obtained according to the SOC value of the low-voltage storage battery, and when a sum of the charging power of the power battery and the charging power of the low-voltage storage battery is greater than the maximum allowable generating power of the secondary motor, the engine of the hybrid electric vehicle is controlled to actuate the secondary motor to generate power to charge the low-voltage storage battery through a DC-DC converter of the hybrid electric vehicle.

13. The power generation control method of a hybrid electric vehicle according to claim 12, wherein a sum of the charging power of the power battery and the charging power of the low-voltage storage batter is less than or equal to the maximum allowable generating power of the secondary motor, the engine is controlled to actuate the secondary motor to generate power to charge the power battery while charging the low-voltage storage battery through the DC-DC converter.

14. A computer-readable storage medium, comprising an instruction stored therein, wherein when the instruction is executed, a hybrid electric vehicle performs power generation control method according to any one according to claims 9 to 13.
